# EUROPEAN PATENT APPLICATION

(11) **EP 2 474 804 A1**
(43) Date of publication of application: **11.07.2012**
(21) Application number: 11150474.2
(22) Date of filing: 10.01.2011
(51) Int. Cl.: F28F 3/08, F28F 9/007, F16B 43/00

(54) **Plate heat exchanger**

(71) Applicant: Alfa Laval Corporate AB, 221 00 Lund (SE)
(72) Inventor: Forstenius, Christopher, 21240 Malmö (SE); Gidner, Johan, 227 63 Lund (SE)

(57) **Abstract**

A plate heat exchanger comprising a set of heat exchanger plates arranged between a frame plate (11) and a pressure plate. A guide bar (15) guides the set of heat exchanger plates and the pressure plate (12) relatively the frame plate, a tightening member (40) is arranged on the guide bar (15) and a plate engager (50) is arranged intermediate the tightening member (40) and the pressure plate (12) for allowing the tightening member (40) to press the pressure plate (12) in a direction (D2) towards the frame plate (11). The plate engager (50) is releasable and the tightening member (40) is configured to protect the guide bar (15), such that the pressure plate (12) may move in a direction from the frame plate (11) and past the tightening member (40) when the plate engager (50) is released. A related method is also described.

## Description

### Technical Field

The invention relates to a plate heat exchanger where a guide bar guides a set of heat exchanger plates and a pressure plate relatively a frame plate.

### Background Art

Plate heat exchangers are typically provided with a number of heat exchanger plates that are stacked between a frame plate and a pressure plate. Gaskets are often arranged between the heat exchanger plates, for example in applications where the plate heat exchanger should be opened for cleaning and maintenance of the heat exchanger plates, or when one or more heat exchanger plates should be replaced, added or removed.

The heat exchanger plates are pressed together by tightening bolts that extend from the pressure plate to the frame plate. An arrangement of parallel flow channels that are sealed by the gaskets are formed between the heat exchanger plates for bringing two fluids at different temperatures thermally close to each other, which allows heat to be transferred from one of the fluids to the other. The arrangement of parallel flow channels may be implemented in various ways and a number of different types of plate heat exchangers exist, such as semi-welded plate heat exchangers, double wall plate heat exchangers, wide-gap plate heat exchangers etc.

The plate heat exchanger including the heat exchanger plates and the gaskets may be made of various types of materials. However, the gaskets are typically made of a flexible material and a compression of the heat exchanger plates is necessary to allow the gaskets to properly seal the parallel flow channels.

When the plate heat exchanger shall be opened the tightening bolts are released and the pressure plate is moved in a direction away from the frame plate that typically is fixed to a support surface such as a floor structure. The movement of the pressure plate is guided by one or more guide bars and/or support bars that guides and/or supports the pressure plate. After the pressure plate is moved away from the frame plate the compression on the heat exchanger plates is released and the heat exchanger plates may be separated by moving each heat exchanger plate away from the frame plate. The plate heat exchanger is thereby opened and some or all heat exchanger plates are then accessible and may be cleaned, removed or replaced with new ones.

When the plate heat exchanger shall be closed all plates are moved towards the frame plate as guided by the guide bars/support bars. The closing includes tightening the tightening bolts for compressing the heat exchanger plates, and the guide bars/support bars assure that the plates are properly aligned in relation to each other.

Principles related to opening and closing a plate heat exchanger as well as properly guiding and supporting the different plates are well known within the art and a number of related techniques are disclosed.

For example, W09923434 discloses a plate heat exchanger with tie bars (tightening bolts) that extend between a frame plate and a pressure plate for holding these plates at a desired distance from each other such that a core of heat exchanging plates are held together. At least one of the tie bars creates a guiding element for the pressure plate and the heat exchanging plates, and is surrounded by a protecting sleeve for protecting threads of the guiding element from engagement with the heat transferring plates.

W02010104449 discloses a plate heat exchanger where threaded tightening bolts extend between a first end plate (pressure plate) and second end plate (frame plate). A guiding element is arranged on one of the tightening bolts for providing a more optimal load distribution over the plate heat exchanger while still assuring that the first end plate and a number of heat exchanger plates are properly guided.

The prior art facilitates opening and closing of a plate heat exchanger while still assuring that a pressure plate and heat exchanger plates are properly guided and supported. However, in some cases opening and closing takes relatively long time which reduces the operational time of the plate heat exchanger, in particular if the plate heat exchanger must be regularly cleaned.

### Summary

It is an object of the invention to at least partly overcome one or more of the above-identified limitations of the prior art. In particular, it is an object to provide for an increased operational time of a plate heat exchanger.

Hence a plate heat exchanger is provided, which comprises: a frame plate; a pressure plate; a set of heat exchanger plates arranged between the frame plate and the pressure plate; a guide bar for guiding the set of heat exchanger plates and the pressure plate relatively the frame plate; a tightening member arranged on the guide bar; and a plate engager arranged intermediate the tightening member and the pressure plate for allowing the tightening member to press the pressure plate in a direction towards the frame plate. The plate engager is releasable and the tightening member is configured to protect the guide bar, such that the pressure plate may move in a direction from the frame plate and past the tightening member when the plate engager is released.

Typically, the plate engager may be releasable and the tightening member may be configured to protect the guide bar, such that the pressure plate and one or more heat exchanger plate of the set of heat exchanger plates may move in a direction from the frame plate and past the tightening member when the plate engager is released.

Since the pressure plate and generally also heat exchanger plates may move past the tightening member when the plate engager is released it is not necessary to remove the tightening member completely from the guide bar when the plate heat exchanger shall be e.g. opened. As a result, the plate heat exchanger may be more quickly opened and closed, which increases an operational time of the plate heat exchanger.

Another advantage with the plate engager and the tightening member on the guide bar is that the guide bar may act as a tightening bolt that compresses the heat exchanger plates. An effect of this advantage is that a compression force may be more evenly distributed over the heat exchanger plates, e.g. when the guide bar is combined with conventional tightening bolts.

The plate engager may have the form of a washer that is provided with a U-shaped cut-out that allows the plate engager to be removed from the position intermediate the tightening member and the pressure plate. When the plate engager is removed the tightening member may not act on or engage the pressure plate, which allows the pressure plate to slide along the guide bar, past the tightening member. Typically, this may also allow heat exchanger plates of the set of heat exchanger plates to slide along the guide bar, past the tightening member.

In this context, the plate engager may be seen as an intermediate element that provides a connection between the pressure plate and the tightening member, and when the plate engager is removed the connection is lost. The plate engager may thus be seen as having an engaging function that allows a force to be transferred from the tightening member to the pressure plate, and vice versa.

The plate engager may comprise a recess that is configured to receive the tightening member for restraining a transverse movement of the plate engager relative the tightening member.

The plate engager may comprise a connector that is configured to interact with a connector of the pressure plate, for restraining a rotational movement of the plate engager relative the pressure plate.

The tightening member may comprise a guide section for guiding the pressure plate past the tightening member, and a grip section for tightening the tightening member and thereby pressing the pressure plate in a direction towards the frame plate. The guide section of the tightening member may also guide the heat exchanger plates past the tightening member.

The plate heat exchanger may comprise a guide sleeve configured to be arranged over the grip section of the tightening member, for guiding the pressure plate past the grip section of the tightening member. The guide sleeve may also guide the heat exchanger plates past the grip section of the tightening member.

The guide sleeve may be elongated and may cover a threaded section of the guide bar, for guiding the pressure plate over the threaded section of the guide bar. The guide sleeve may also guide the heat exchanger plates over the threaded section of the guide bar.

The plate heat exchanger may comprise a support for the guide bar, wherein the support may have a guide section for guiding the pressure plate past the support. The guide section of the support may also guide the heat exchanger plates past the support.

The support may comprise an aperture through which the guide bar may extend.

The support may be arranged underneath a position of the pressure plate when the heat exchanger is assembled for operation.

The guide section of the support may have a peripheral surface with a shape that is similar with a shape of a peripheral surface of the guide section of the tightening member.

The pressure plate may comprise a cut-out for receiving the guide bar, and a surface of the cut-out may be configured to slide past the tightening member.

The plate heat exchanger may comprise a set of tightening bolts arranged at a first and a second side of the plate heat exchanger. The guide bar may then be arranged at a lower side of the plate heat exchanger for pressing the pressure plate towards the frame plate in cooperation with the set of tightening bolts.

The plate heat exchanger may comprise a further guide bar arranged at an upper side of the plate heat exchanger for pressing the pressure plate towards the frame plate in cooperation with the set of tightening bolts and the guide bar at the lower side of the plate heat exchanger. A further tightening member and a further plate engager may then be arranged at the further guide bar and may be similar to the tightening member and the plate engager at the guide bar at the lower side of the plate heat exchanger.

According to another aspect a method is provided for opening the plate heat exchanger described above. The method comprises: untightening the tightening member such that the plate engager may be released; releasing the plate engager; tightening the tightening member; and moving the pressure plate in a direction from the frame plate and past the tightening member.

The method may be employed for all embodiments and variants of the plate heat exchanger. Generally, the method includes untightening a set of tightening bolts that are arranged at a first and a second side of the plate heat exchanger, for moving the pressure plate in the direction from the frame plate and past the tightening member.

Still other objectives, features, aspects and advantages of the invention will appear from the following detailed description, from the attached claims as well as from the drawings.

### Brief Description of the Drawings

Embodiments of the invention will now be described, by way of example, with reference to the accompanying schematic drawings, in which
Fig. 1 is a perspective view of a plate heat exchanger, as seen from a first side,
Fig. 2 is a perspective view of the plate heat exchanger of Fig. 1, as seen from a second side,
Fig. 3 is a cross-sectional view of section B in Fig. 2,
Figs 4a - 4b are perspective views of a first and second side of a plate engager,
Fig. 5 is a perspective view of a tightening member,
Fig. 6 is a perspective view of a protective sleeve,
Fig. 7 is a perspective view of a support for a guide bar,
Fig. 8 is a partial perspective view of a pressure plate of a plate heat exchanger,
Figs 9a - 9d are perspective views that illustrate how a plate engager may be removed from a guide bar,
Fig. 10 is a flow chart that illustrates a method of opening a plate heat exchanger,
Fig. 11 is a perspective view that illustrates another embodiment of a protective sleeve,
Fig. 12 is a cross-sectional view of the embodiment illustrated by Fig. 11,
Figs 13a - 13d are perspective views of further embodiments of a tightening member, and
Fig. 14 is a perspective view of another embodiment of a plate heat exchanger.

### Detailed description

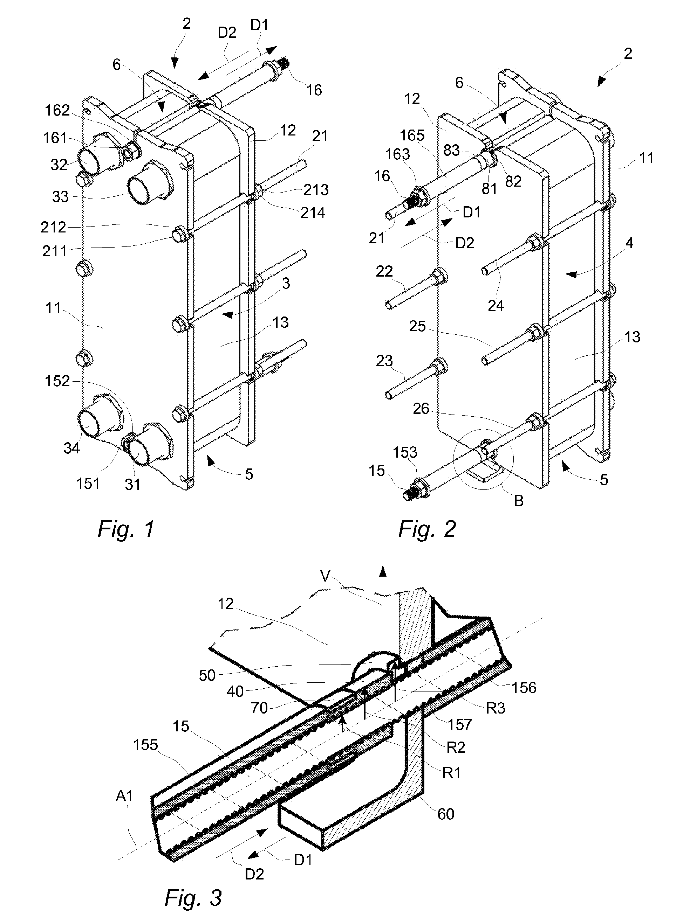

With reference to Fig. 1 and Fig. 2 a plate heat exchanger 2 is illustrated. The plate heat exchanger 2 comprises a frame plate 11, a pressure plate 12 and a number of heat exchanger plates 13 that are arranged between the frame plate 11 and the pressure plate 12. The heat exchanger plates 13 are corrugated and gaskets (not shown) are arranged between the heat exchanger plates 13 for sealing parallel flow channels that are formed between the heat exchanger plates 13. A first fluid may enter every second, parallel flow channel from a first inlet 31 and may exit the same parallel flow channels via a first outlet 33. A second fluid may enter the other flow channels (i.e. those not entered by the first fluid) via a second inlet 32 and may exit via a second outlet 34.

The arrangement of the heat exchanger plates 13, the gaskets and the parallel flow channels may be embodied in many different ways and conventional techniques and principles may be applied. As is known, during operation of the plate heat exchanger 2 heat is transferred from the warmer of the fluids to the colder one by transferring the fluids via the inlets 31, 32 and the outlets 33, 34.

The heat exchanger plates 13 are compressed between the frame plate 11 and the pressure plate 12 by means of a number of tightening bolts 21-26 that extend from the frame plate 11 to the pressure plate 12. The tightening bolts 21-26 may be seen as conventional, elongated bolts that are arranged in cut-outs of the plates 11, 12. Each of the tightening bolts 21- 26 has a bolt head at the frame plate 11 and a tightening nut at the pressure plate 12, such as bolt head 211 and tightening nut 213 of a first tightening bolt 21 of the tightening bolts 21-26. Washers are arranged intermediate each bolt head respectively tightening nut, such as washers 212 and 214 of the first tightening nut 21, and the heat exchanger plates 13 are compressed by tightening each of the tightening nuts on the tightening bolts 21-26.

In brief, the plate heat exchanger 2 has a box-like structure where half of the tightening bolts 21-23 are arranged at a first side 3 of the plate heat exchanger 2 and where the other half of the tightening bolts 24-26 are arranged at a second side 4 of the plate heat exchanger 2. Since the plates 11, 12, 13 of the plate heat exchanger 2 generally are vertically arranged, it may be said the plate heat exchanger 2 has an upper side 6 and a lower side 5.

When the heat exchanger plates 13 are compressed the heat exchanger plates 13 and the pressure plate 12 are properly aligned with the frame plate 11. To accomplish this alignment the plate heat exchanger 2 has one or more guide bars, such as an upper guide bar 16 at the upper side 6 and a lower guide bar 15 at the lower side 5. The guide bars 15, 16 extend through holes or cut-outs in the frame plate 11, in the pressure plate 12 and in the heat exchanger plates 13. One or both of the guide bars 15, 16 may also act as a support bar for the heat exchanger plates 13 and the pressure plate 12. This means that the heat exchanger plates 13 and the pressure plate 12 may hang from the upper guide bar 16 and/or may be supported by the lower guide bar 15.

In any case, each of the guide bars 15, 16 controls a movement of the heat exchanger plates 13 and the pressure plate 12 towards the frame plate 11 when the heat exchanger plates 13 are compressed, e.g. when the plate heat exchanger 2 is assembled for operation. When the plate heat exchanger 2 shall be opened the tightening nuts at the tightening bolts 21-26 are released such that the tightening bolts 21-26 may be removed. The heat exchanger plates 13 and the pressure plate 12 may then be moved along the guide bars 15, 16, in a direction D1 along the guide bars 15, 16 and from the frame plate 11, which thereby opens the plate heat exchanger 2.

When the plate heat exchanger 2 shall be assembled for operation the heat exchanger plates 13 and the pressure plate 12 are moved in an opposite direction D2 along the guide bars 15, 16 and towards the frame plate 11. The movement in the opposite direction D2 towards the frame plate 11 eventually results in the closing of the plate heat exchanger 2 and is accomplished by tightening the nuts on the tightening bolts 21-26.

The upper guide bar 16 has a free, threaded end that extends on a side of the frame plate 11 that is opposite the heat exchanger plates 13. A nut 161 is arranged on the free end of the guide bar 15 and a washer 162 is positioned between the nut 161 and the frame plate 11, which efficiently prevents a movement of the guide bar 16 relatively the frame plate 11. The lower guide bar 15 has a corresponding threaded end where a nut 151 and a washer 152 are arranged for preventing a movement of the lower guide bar 15 relatively the frame plate 11.

With reference to Fig. 3, which is a cross-sectional view of section B in Fig. 2, a tightening member 40 is arranged on the lower guide bar 15 for allowing the lower guide bar 15 to assist in compressing the heat exchanger plates 13. A plate engager 50 is arranged intermediate the tightening member 40 and the pressure plate 12 for allowing the tightening member 40 to press the pressure plate 12 in the direction D2 towards the frame plate 11. The tightening member 40 is partially covered by a sleeve 70. A first protective sleeve 155 covers a section of the guide bar 15 at one side of the pressure plate 12 and a second protective sleeve 156 covers a section of the lower guide bar 15 at the other side of the pressure plate 12. Each of the protective sleeves 155, 156 has an inner diameter that allows the respective sleeve to be repeatedly slid over the lower guide bar 15. The first protective sleeve 155 is kept in place on the lower guide bar 15 by a first end nut 153 (see Fig. 2) that prevents a movement in the direction D1 from the frame plate 11. A corresponding protective sleeve 165 at the upper guide bar 16 is in a similar manner kept in place by a second end nut 163 (see Fig. 2).

The lower guide bar 15 comprises threads 157, has a circular cross-section that is defined by a first radius R1 and extends along a geometrical axis A1. The lower guide bar 15 also extends through a support 60 that supports the lower guide bar 15 in a vertical direction V. The vertical direction V may be defined as the direction from the lower side 5 of the plate heat exchanger 2 to the upper side 6 of the plate heat exchanger 2. The support 60 is arranged underneath a position the pressure plate 12 has when the plate heat exchanger 2 is assembled for operation, i.e. when the pressure plate 12 has a position relative the frame plate 11 that provides a proper compression of the heat exchanger plates 13.

The tightening member 40 has an inner, threaded section with a dimension that allows it to be screwed along the lower guide bar 15 like a conventional nut. Thus, if the tightening member 40 is rotated in one direction it moves in the direction D1 from the frame plate 11, which is referred to as untightening the tightening member 40. A rotation in an opposite direction moves the tightening member 40 in the direction D2 towards the frame plate 11, which is referred to as tightening the tightening member 40. The tightening member 40 extends in a radial direction from the lower guide bar 15 and has a circular cross-section with an outer periphery that is defined by a second radius R2. Accordingly, the second radius R2 is larger than the first radius R1. The plate engager 50 extends in a radial direction from the lower guide bar 15 and has an outer periphery that is defined by a third radius R3 that is larger than the second radius R2.

The first protective sleeve 155 and the second protective sleeve 156 each has a diameter that corresponds to 2 x the second radius R2. This means that that each of the protective sleeves 155, 156 has a circular shape with an outer periphery that is defined by the second radius R2.

Each of the radiuses R1, R2 and R3 discussed herein may be seen as having its radial centre at a point that coincides with the geometrical axis A1.

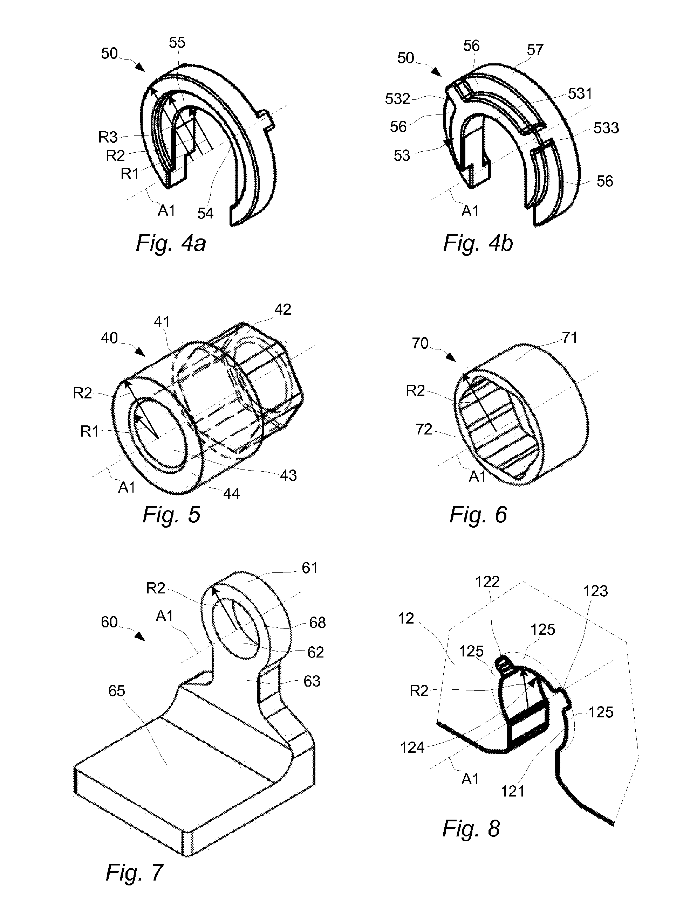

In detail, with further reference to Fig. 4a and Fig. 4b the plate engager 50 may have the shape of a washer that is provided with a cut-out 54. The plate engager 50 may have a circular shape with an outer dimension that is defined by the third radius R3. The cut-out 54 may be U-shaped and may have a width that is defined by the diameter (2 x the first radius R1) of the lower guide bar 15 plus a small play. This allows the plate engager 50 to be placed on the lower guide bar 15 such that the lower guide bar 15 may extend through the cut-out 54. Obviously, the U-shaped cut-out 54 allows the plate engager 50 to be repeatedly placed on respectively removed from the lower guide bar 15.

On one side of the plate engager 50 that shall face the tightening member 40 (see Fig. 4a) the plate engager 50 has a recess in form of a circular groove 55 that is defined by the second radius R2 plus a small play. As indicated, an outer periphery of the plate engager 50 is defined by the third radius R3.

On another side of the plate engager 50 that shall face the pressure plate 12 (see Fig. 4b) the plate engager 50 has a connector 53. The connector 53 has the form of an arc-shaped protrusion 531 with a first protuberance 532 and a second protuberance 533 that extend in radial directions from the arc-shaped protrusion 531. Intermediate the protuberances 531, 532 an abutment surface 56 is formed for allowing the plate engager 50 to engage the pressure plate 12. For the exemplified plate engager 50 the abutment surface 56 may have a redial extension from the second radius R2 to the third radius R3.

With reference to Fig. 5 the tightening member 40 comprises a guide section 41, a grip section 42 and a circular through hole 43. The guide section 41 has a circular shape with an outer periphery that is defined by the second radius R2. At an end of the guide section 41 the tightening member 40 has an engagement surface 44 that may be received by the circular groove 55 of the plate engager 50. The grip section 42 may have the form a conventional, hexagonal nut for allowing a tool to engage the tightening member 40. The size of the through hole 43 is defined by the first radius R1 and is threaded for allowing it to be screwed onto and along the lower guide bar 15.

With reference to Fig. 6 the sleeve 70 comprises a hexagonal trough-hole 72 that may receive and cover the grip section 42 of the tightening member 40. Thus, the sleeve 70 may be arranged over the grip section 42 of the tightening member 40. A peripheral surface of the sleeve 70 is referred to as a guide section 71 and may have a circular shape that is defined by the second radius R2.

With reference to Fig. 7 the support 60 comprises a base 65 from which an arm 63 extends. An upper portion 68 of the arm has an aperture 62 through which the lower guide bar 15 may extend. An upper, peripheral surface of the upper portion 68 is referred to as a guide section 61 and may have a circular shape that is defined by the second radius R2.

With reference to Fig. 8 the pressure plate 12 comprises a cut-out 121 that is arranged for receiving the lower guide bar 15 and the support 60. The cut-out 121 may be referred to as a hole, slot, groove, aperture or through-hole, and may have a circular shape that is defined by the second radius R2 plus a small play. An inner surface 124 of the cut-out 121 forms a surface that may slide past the tightening member 40. From this follows that the inner surface also has a circular shape that is defined by the second radius R2 plus a small play.

The pressure plate 12 further comprises a connector in form of two slots 122, 123 that extend in radial directions from the cut-out 121. These slots 122, 123 may be seen as integral with the cut-out 121 and are dimensioned to receive the protuberances 532, 533 of the plate engager 50. This means that the cut-out 121 may receive the plate engager 50. The protrusion 531 and the protuberances 532, 533 of the plate engager 50 may then extend into the cut-out 121 and the slots 122, 123, respectively. The protrusion 53 of the plate engager 50 then forms a connector that may engage the connectors in form of the slots 122, 123 in the pressure plate 12. When the cut-out 121 of the pressure plate 12 receives the plate engager 50 the abutment surface 56 of the plate engager 50 abuts a corresponding abutment surface 125 of the pressure plate 12.

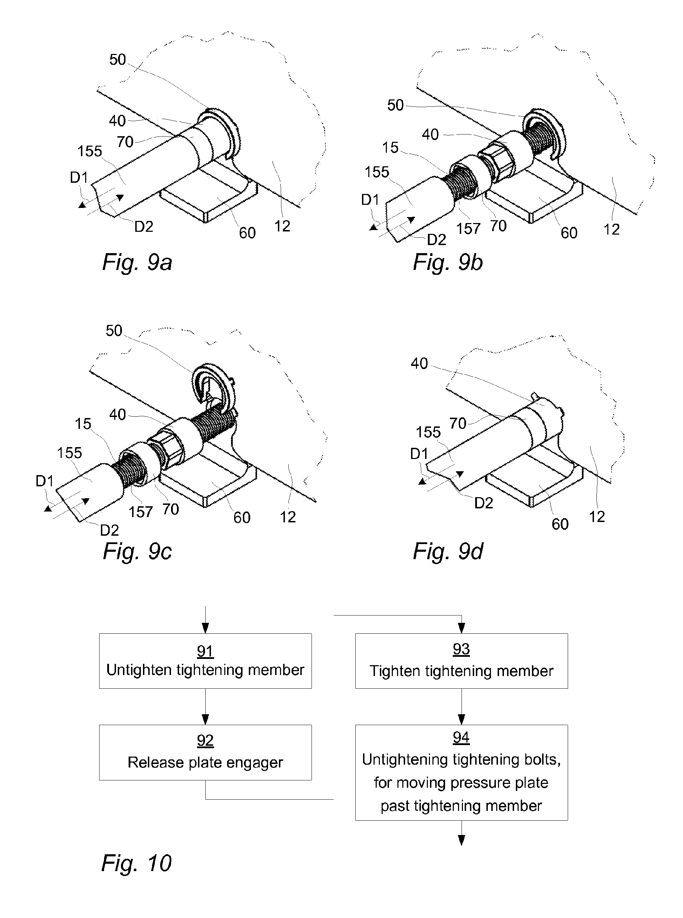

With reference to Figs 9a - 9d an illustration is given of how the plate engager 50 may be released and how the tightening member 40 thereafter may protect the lower guide bar 15 such that the pressure plate 12 may move past the tightening member 40, for example when the plate heat exchanger 2 shall be opened.

Fig. 9a illustrates the situation when the plate engager 50 is properly arranged intermediate the tightening member 40 and the pressure plate 12. The tightening member 40 may then press the pressure plate 12 in the direction D2 towards the frame plate 11 since the engagement surface 44 of the tightening member 40 abuts to the circular groove 55 of the plate engager 50, and since the abutment surface 56 of the plate engager 50 meets the abutment surface 125 of the pressure plate 12. The tightening member 40, the plate engager 50 and the lower guide bar 15 may then cooperate with the tightening bolts 21-26 for pressing the pressure plate 12 towards the frame plate 11 such that the heat exchanger plates 13 are compressed. The sleeve 70 is arranged over the grip section 42 of the tightening member 40 and the first protective sleeve 155 is adjacent the sleeve 70 such that the lower guide bar 15 is fully protected.

In this position a transverse movement of the plate engager 50 relative the tightening member 40 is restrained. This is accomplished since the recess in form of the circular groove 55 in the plate engager 50 receives the engagement surface 44 of the tightening member 40. The transverse movement may be defined as a movement that is perpendicular to the geometrical axis A1 along which the lower guide bar 15 extends, or as a movement that is parallel with the vertical direction V previously mentioned. Also, the connector 53 of the plate engager 50 interacts with the connector in form of the protuberances 122, 123 in the pressure plate 12, which restrains a rotational and a transverse movement of the plate engager 50 relative the pressure plate 12.

The described arrangement of the a plate engager 50 intermediate the tightening member 40 and the pressure plate is one example of how the tightening member 40 may be allowed to press the pressure plate 12 in the direction D2 towards the frame plate 11, i.e. how interactivity between the tightening member 40 and the pressure plate 12 may be accomplished. Specifically, the tightening member 40 may press the pressure plate 12 by rotating it around the lower guide bar 15 such that it moves in a direction towards the pressure plate 12, which corresponds to a movement in the direction D2 towards the frame plate 11. From a functional perspective, the plate engager 50 may be seen as a means for meshing or interlocking the tightening member 40 and the pressure plate 12.

Fig. 9b and Fig. 9c illustrate how the plate engager 50 may be released which includes removing the end nut 153 (see Fig. 2) and moving the first protective sleeve 155 and the sleeve 70 in the direction D1 from the frame plate 11. The threads 157 of the lower guide bar 15 as well as the grip section 42 of the tightening member 40 are then exposed and the threaded tightening member 40 may be rotated in a direction such that it moves along the lower guide bar 15 in the direction D1 away from the frame plate 11, i.e. away from the pressure plate 12. During this process the tightening bolts 21-26 keep the pressure plate 12 in a fix position relatively the frame plate 11, and the plate engager 50 may easily be removed by sliding it a short distance it in the direction D1 and by lifting it from the lower guide bar 15 (Fig. 9c).

Fig. 9d illustrates the tightening member 40 when it has been rotated in a direction such that it moves along the lower guide bar 15 in the direction D2 towards the frame plate 11 (i.e. towards the pressure plate 12) until has met the support 60. The sleeve 70 and the first protective sleeve 155 have been moved in the direction D2 towards the frame plate 11 such that the sleeve 70 covers the grip section 42 of the tightening member 40 and the first protective sleeve 155 meets the sleeve 70. Finally, the end nut 153 (see Fig. 2) has been screwed onto the lower guide bar 15. As may be seen, the tightening member 40 protects the guide bar and is aligned with the guide bar.

As previously described, the support 60 has a guide section 61, the tightening member 40 has a guide section 41 and the sleeve 70 has a guide section 71. Each of these guide sections 61, 41, 71 as well as the first protective sleeve 155 has a circular shape with an outer periphery that is defined by the second radius R2. This means that the pressure plate 12 may now be moved past the tightening member 40 as guided by the guide sections 61, 41, 71 and in the direction D1 from the frame plate 11, having in mind that the cut-out 121 of the pressure plate 12 has a circular shape that is defined by the second radius R2 plus a small play. Obviously, moving the pressure plate 12 in the direction D1 assumes that the tightening bolts 21-26 are released. Also, any heat exchanger plate of the heat exchanger plates 13 may now move in a direction from the frame plate 11 and past the tightening member 40 when the plate engager 50 is released, just like the pressure plate 12.

Generally, the pressure plate 12 as well as one or more of the heat exchanger plates 13 are gradually moved in the direction D1 when the tightening bolts 21-26 are gradually released, i.e. when the nuts on the tightening bolts 21-26 are screwed in the direction D1. Then the gaskets between the heat exchanger plates 13 are allowed to expand which moves the pressure plate 12 and the heat exchanger plates 13 (mainly those heat exchanger plates closest to the pressure plate 12) in the direction D1. This self-expansion eventually stops and the tightening bolts 21-26 may finally be removed from the frame plate 11 and the pressure plate 12. Thereafter the pressure plate 12 and the heat exchanger plates 13 may be manually moved in the direction D1 from the frame plate 11.

Since the guide sections 61, 41, 71 and the first protective sleeve 155 are at least partly defined by a common radius, it may be said that the support 60, the tightening member 40, the sleeve 70 and/or the first protective sleeve 155 have at least partial peripheral surfaces that are similar.

It should be noted that the pressure plate 12 must not necessarily be in contact with any of the guide sections 61, 41, 71 or the first protective sleeve 155, even tough it is possible that the inner surface 124 of the cut-out 121 slide over and past some or all of the guide sections 61, 41, 71 and the first protective sleeve 155.

With reference to Fig. 10 a method of opening the plate heat exchanger 2 is illustrated. The method corresponds to the procedure described in connection with Figs 9a - 9d, and comprises in its most general form i) untightening 91 the tightening member 40, such that the plate engager 50 may be released, ii) releasing 92 the plate engager 50, iii) tightening 93 the tightening member 40, and iv) untightening 94 the tightening bolts 21-26, for moving the pressure plate 12 in the direction from the frame plate 11 and past the tightening member 40.

When the plate heat exchanger 2 shall be closed the method is performed in reverse order. The procedure described in connection with Figs 9a - 9d may also be performed in reverse order in order to close the plate heat exchanger 2.

A number of alternative embodiments of the described plate heat exchanger 2 are conceivable. For example and with reference to Fig. 2, a plate engager 82, a tightening member 81 and a sleeve 83 may be arranged on the upper guide bar 16 and may correspond to the plate engager 50, the tightening member 40 and the sleeve 70 at the lower guide bar 15. In this case the pressure plate 12 has a further cut-out that corresponds to the cut-out 121 for the lower guide bar 15, but adapted for receiving the upper guide bar 16 and for interacting with the associated plate engager 82. The upper guide bar 16 may then act as a guide bar and/or support bar in a manner similar with the lower guide bar 15. The pressure plate 12 may be moved past the tightening member 81 at the upper guide bar 16 when the corresponding plate engager 82 is released, which may be accomplished in a manner corresponding to the releasing of the plate engager 50 at the lower guide bar 15. The upper guide bar 16 including the tightening member 81 may implement any embodiments related to the components arranged at the lower guide bar 15. However, a support at the upper guide bar 16 is often less useful than the support 60 at the lower guide bar 15 and may therefore be omitted.

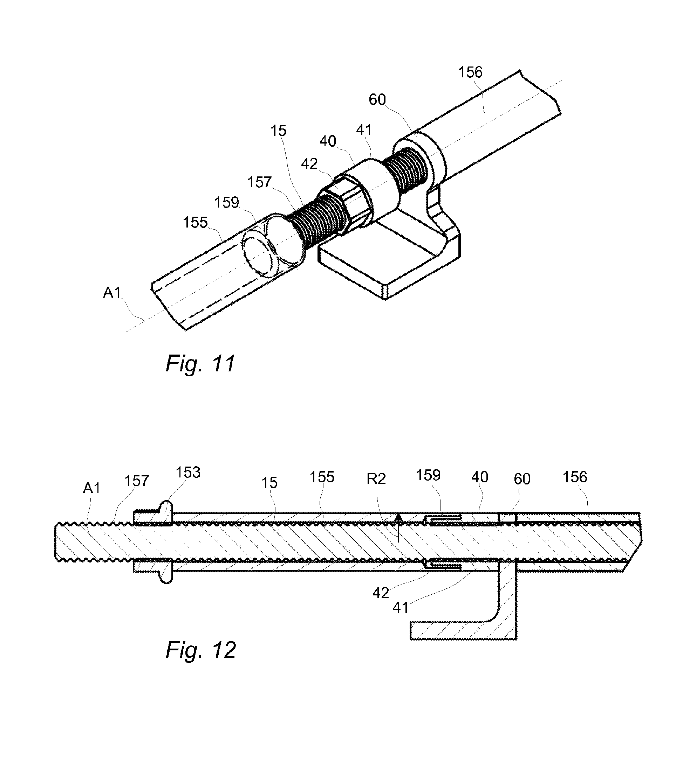

With reference to Fig. 11 and Fig. 12 another embodiment of a plate heat exchanger 2 is illustrated. This embodiment corresponds to the embodiment of Fig. 3 but with the difference that the sleeve 70 is omitted and functionally replaced by the first protective sleeve 155. The first protective sleeve 155 is then adjacent the tightening member 40 and comprises a hexagonal cut-out 159. The hexagonal cut-out 159 may receive and cover the grip section 42 of the tightening member 40.

Instead of having the hexagonal cut-out 159 in the sleeve 155, the sleeve 155 may comprise e.g. a circular cut-out that may receive and cover the grip section 42 of the tightening member 40. A similar circular cut-out may also be employed for the sleeve 70 of Fig. 6.

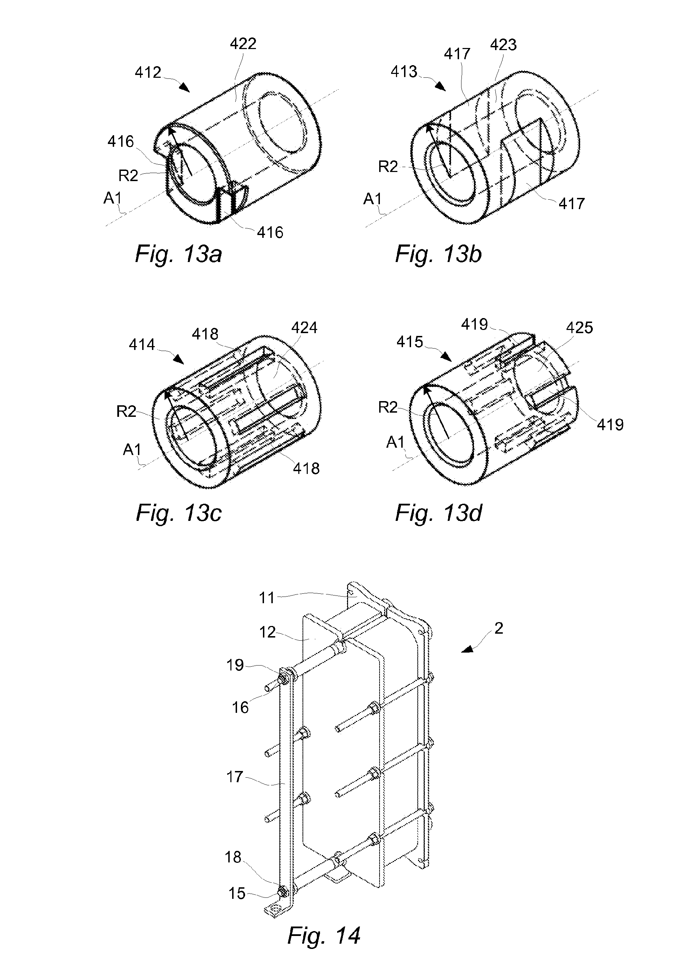

With reference to Fig. 13a a second embodiment of a tightening member 412 is illustrated. In this embodiment the grip section of the tightening member 412 comprises a set of grooves 416 at an end of the tightening member 412. The tightening member 412 has also a guide section 422 with an outer periphery that is defined by the second radius R2.

With reference to Fig. 13b a third embodiment of a tightening member 413 is illustrated. This embodiment corresponds to the embodiment of Fig. 13a with the difference that a grip section 417 is somewhat larger and is arranged as grooves at opposite sides of the tightening member 417. The tightening member 413 has a guide section 423 with an outer periphery that is defined by the second radius R2.

With reference to Fig. 13c a fourth embodiment of a tightening member 414 is illustrated where a grip section 418 is arranged as elongated slots at a peripheral surface of the tightening member 414. The tightening member 414 has a guide section 424 with an outer periphery that is defined by the second radius R2. The guide section 424 is arranged intermediate the slots that form the grip section 418.

With reference to Fig. 13d a fifth embodiment of a tightening member 415 is illustrated. This embodiment corresponds to the embodiment of Fig. 13c with the difference that the slots that form a grip section 419 are displaced in a direction along the geometrical axis A1. The tightening member 415 has a guide section 425 with an outer periphery that is defined by the second radius R2.

When a tightening member like those in the embodiments of Figs 13a-13d is used the sleeve 70 may be omitted since the grip section must not be covered for allowing the pressure plate 12 and any heat exchanger plate to move smoothly past the tightening member. Preferably, when moving the pressure plate 12 and any heat exchanger plate the guide section of the tightening member is arranged at an uppermost position as seen along the vertical direction V, such that the pressure plate 12 may rest mainly on the guide section in case the pressure plate 12 is in contact with the tightening member. The guide section may be arranged in the uppermost position by rotating the tightening member around the guide bar until the guide section is "uppermost", right before moving the pressure plate 12 past the tightening member.

Conventional tools like spanners and/or tongs may be used to engage the grip sections of the described tightening members. Of course, tools specifically adapted for a certain grip section may also be used.

With reference to Fig. 14 another embodiment of the plate heat exchanger 2 is illustrated. This embodiment comprises a support column 17 trough which the lower guide bar 15 and the upper guide bar 16 extend. The support column 17 is kept in place by two nuts 18, 19 that are screwed onto the guide bars 15, 16. This embodiment is advantageous in that the support column 17 gives an increased support for the guide bars 15, 16.

From the description above follows that, although various embodiments of the invention have been described and shown, the invention is not restricted thereto, but may also be embodied in other ways within the scope of the subject-matter defined in the following claims. For example, the plate engager may have different sizes and shapes, as long as it may provide engagement between the pressure plate and the tightening member and as long as the engagement may be released or in some other way be removed. In addition, the pressure plate may have a different type of cut-out or opening for the guide bar, as long as the described function may be accomplished.

Moreover, shapes and/or sizes described herein with reference to a certain radius must not necessarily refer to exactly the same radius, since various plays and tolerances may be applied. It is also possible to have e.g. non-circular guide bars and tightening members, as long as the described functionality may be implemented.

## Claims

1. A plate heat exchanger comprising
a frame plate (11),
a pressure plate (12),
a set of heat exchanger plates (13) arranged between the frame plate (11) and the pressure plate (12),
a guide bar (15) for guiding the set of heat exchanger plates (13) and the pressure plate (12) relatively the frame plate (11),
a tightening member (40) arranged on the guide bar (15), and
a plate engager (50) arranged intermediate the tightening member (40) and the pressure plate (12) for allowing the tightening member (40) to press the pressure plate (12) in a direction towards the frame plate (11), wherein
the plate engager (50) is releasable and the tightening member (40) is configured to protect the guide bar (15), such that the pressure plate (12) may move in a direction from the frame plate (11) and past the tightening member (40) when the plate engager (50) is released.

2. A plate heat exchanger according to claim 1, wherein the plate engager (50) has the form of a washer that is provided with a U-shaped cut-out (54) that allows the plate engager (50) to be removed from the position intermediate the tightening member (40) and the pressure plate (12).

3. A plate heat exchanger according to claim 1 or 2, wherein the plate engager (50) comprises a recess (55) that is configured to receive the tightening member (40) for restraining a transverse movement of the plate engager (50) relative the tightening member (40).

4. A plate heat exchanger according to any one of claims 1 - 3,
wherein the plate engager (50) comprises a connector (53) that is configured to interact with a connector (122, 123) of the pressure plate (12), for restraining a rotational movement of the plate engager (50) relative the pressure plate (12).

5. A plate heat exchanger according to any one of claims 1 - 4,
wherein the tightening member (40) comprises
a guide section (41) for guiding the pressure plate (12) past the tightening member (40), and
a grip section (42) for tightening the tightening member (40) and thereby pressing the pressure plate (12) in a direction towards the frame plate (11).

6. A plate heat exchanger according to claim 5, comprising a guide sleeve (70, 155) configured to be arranged over the grip section (42) of the tightening member (40), for guiding the pressure plate (12) past the grip section (42) of the tightening member (40).

7. A plate heat exchanger according to claim 6, wherein the guide sleeve (155) is elongated and covers a threaded section (157) of the guide bar (15), for guiding the pressure plate (12) over the threaded section (157) of the guide bar (15).

8. A plate heat exchanger according to any one of claims 1 - 7, comprising a support (60) for the guide bar (15), wherein the support (60) has a guide section (61) for guiding the pressure plate (12) past the support (60).

9. A plate heat exchanger according to claim 8, wherein the support (60) comprises an aperture (62) through which the guide bar (15) extends.

10. A plate heat exchanger according to claim 8 or 9, wherein the support (60) is arranged underneath a position of the pressure plate (12) when the heat exchanger is assembled for operation.

11. A plate heat exchanger according to claim 5 and 8, wherein the guide section (61) of the support (60) has a peripheral surface with a shape that is similar with a shape of a peripheral surface of the guide section (41) of the tightening member (40).

12. A plate heat exchanger according to any one of claims 1 - 11,
wherein
the pressure plate (12) comprises a cut-out (121) for receiving the guide bar (15), and
a surface (124) of the cut-out (121) is configured to slide past the tightening member (40).

13. A plate heat exchanger according to any one of claims 1 - 12, comprising a set of tightening bolts (21-26) arranged at a first and a second side (3, 4) of the plate heat exchanger, wherein the guide bar (15) is arranged at a lower side (5) of the plate heat exchanger for pressing the pressure plate (12) towards the frame plate (11) in cooperation with the set of tightening bolts (21-26).

14. A plate heat exchanger according to claim 13, comprising a further guide bar (16) arranged at an upper side (6) of the plate heat exchanger for pressing the pressure plate (12) towards the frame plate (11) in cooperation with the set of tightening bolts (21-26) and the guide bar (15) at the lower side (5) of the plate heat exchanger, wherein a further tightening member (81) and a further plate engager (82) are arranged at the further guide bar (16) and are similar to the tightening member (40) and the plate engager (50) at the guide bar (15) at the lower side (5) of the plate heat exchanger.

15. A method of opening a plate heat exchanger according to any one of claims 1 - 14, comprising
untightening (91) the tightening member (40) such that the plate engager (50) may be released,
releasing (92) the plate engager (50),
tightening (93) the tightening member (40), and
moving (94) the pressure plate (12) in a direction from the frame plate (11) and past the tightening member (40).
